# FASCICULE DE BREVET EUROPEEN

(11) **EP 0 580 491 B1**
(45) Date de publication et mention de la délivrance du brevet: **20.11.1996**
(21) Numéro de dépôt: 93401859.9
(22) Date de dépôt: 19.07.1993
(51) Int. Cl.: B01D 27/00, B01D 27/06, B01D 27/08

(54) **Perfectionnements aux cartouches filtrantes pour liquide et aux filtres équipés de telles cartouches**
Verbesserungen von Flüssigkeitsfilterkartuschen und von mit solchen Kartuschen ausgerüsteten Filtern
Improvements of liquid filter cartridges and of filters equiped with such cartridges

(30) Priorité: 23.07.1992 FR 9209100
(43) Date de publication de la demande: 26.01.1994
(73) Titulaire: FILTRAUTO, F-78180 Montigny le Bretonneux (FR)
(72) Inventeur: Gewiss, Michel, F-35410 Osse (FR); Becker, Thierry, F-78310 Maurepas (FR)
(74) Mandataire: Jacquelin, Marc-Henri

(56) Documents cités:
- DE-A- 1 536 865
- DE-C- 3 514 778
- FR-A- 2 187 387
- FR-A- 2 214 505
- US-A- 3 272 336

## Description

L'invention est relative aux cartouches filtrantes pour liquide, destinées à être montées dans des boîtiers ou corps de filtres de façon amovible aux fins de remplacement après usure ou colmatage, ainsi qu'auxdits boîtiers ou corps, et elle concerne plus spécialement le cas où lesdites cartouches comprennent un élément filtrant tubulaire en papier plissé dont les extrémités sont adhérées respectivement sur deux rondelles.

Dans la plupart des modes de réalisation connus de ces cartouches, les deux rondelles sont constituées en métal ou autre matériau rigide, sont adhérées par collage sur l'élément filtrant et sont entretoisées par un tube métallique intérieur perforé qui s'oppose aux fortes déformations dudit élément, tant radiales qu'axiales.

L'utilisation de ces cartouches amovibles connues donne en général satisfaction, mais elle présente un certain nombre d'inconvénients et en particulier les suivants :
- lesdites cartouches ne sont pas intégralement recyclables ou dégradables en raison de la présence sur chacune d'elles de portions métalliques ou analogues (rondelles et tubes centraux) ; or il est de plus en plus demandé que les éléments usés et remplaçables des moteurs puissent, après usage, être simplement recyclés ou jetés, notamment aux fins de leur combustion ultérieure ;
- le montage desdites cartouches dans leurs boîtiers exige, pour la réalisation d'une bonne étanchéité entre leurs rondelles terminales et des portées en regard des boîtiers, l'interposition de joints annulaires déformables destinés à être écrasés lors dudit montage : bien entendu, ces joints doivent être constamment en état d'assurer l'étanchéité qui leur est confiée, notamment par déformation élastique, ce qui peut poser des problèmes à la longue.

Pour simplifier les problèmes relatifs à l'étanchéité entre les rondelles et les portées en regard des boîtiers de réception des cartouches, il a déjà été proposé de constituer lesdites rondelles en une matière souple.

Mais dans les modes de réalisation proposés pour les cartouches en question (document FR-A-2 214 505), celles-ci étaient dépourvues de tubes intérieurs perforés, même à la fin de leur montage dans leurs boîtiers respectifs, et offraient donc une résistance insuffisante aux déformations, en particulier lors du colmatage de l'élément filtrant.

L'invention a pour but, surtout, de remédier à ces différents inconvénients.

A cet effet, les filtres pour liquide du genre en question selon l'invention comprennent encore, d'une part, une cartouche filtrante comportant elle-même un élément filtrant tubulaire en papier plissé dépourvu de tube rigide perforé central et dont les deux extrémités sont adhérées respectivement sur deux rondelles souples et, d'autre part, un boîtier de réception de la cartouche filtrante comprenant une cuve cylindrique et un couvercle, et ils sont essentiellement caractérisés en ce qu'ils contiennent eux-mêmes, monté axialement sur l'intérieur du couvercle du boitier de reception, un tube rigide perforé dont le diamètre extérieur est sensiblement égal au diamètre intérieur de la cartouche et qui présente à ses deux extrémités des portées annulaires contre lesquelles viennent s'appliquer automatiquement les deux rondelles de la cartouche, au moins lors de la mise en place du couvercle équipé de la cartouche sur la cuve.

Des cartouches filtrantes utilisables dans des filtres selon l'invention comportent encore un élément filtrant tubulaire en papier plissé dépourvu de tube rigide perforé central et dont les deux extrémités sont adhérées respectivement sur deux rondelles souples conformées de façon à pouvoir coopérer à des fins d'étanchéité avec des portées annulaires en regard d'un tube rigide perforé logé de façon amovible dans son volume cylindrique intérieur, et elles sont essentiellement caractérisées en ce que le diamètre intérieur de l'une des rondelles souples est inférieur au diamètre intérieur de l'élément filtrant.

Dans des modes de réalisation préférés, le plissage du papier est du type "plissé-chevronné", c'est-à-dire plissé selon des lignes en zig-zag brisé non seulement selon la direction circonférentielle, mais également selon la direction axiale, ce qui facilite les légères déformations de l'ensemble de la cartouche dans toutes les directions de l'espace.

Dans ce qui suit, l'on va décrire un mode de réalisation préféré de l'invention en se référant au dessin ci-annexé d'une manière bien entendu non limitative.

La figure 1, de ce dessin, montre un filtre pour liquide équipé d'une cartouche filtrante conforme à l'invention.

La figure 2 montre en vue perspective ladite cartouche.

Le filtre ici considéré est destiné à filtrer un liquide tel que, de préférence, l'huile de lubrification d'un moteur à combustion interne.

Il comprend :
- un boîtier cylindrique rigide 1, généralement en métal, dont le fond 2 est perforé par un alésage central fileté 3 et par une couronne de trous 4,
- un couvercle 5 monté sur le boîtier 1 de façon amovible et étanche et présentant en son centre un creux 6 à six pans permettant de commander à l'aide d'une clé hexagonale les vissages et dévissages de l'ensemble du boîtier revêtu de son couvercle sur un raccord fileté approprié en attente,
- un tube perforé central 7 sur lequel on reviendra plus loin,
- et une cartouche filtrante amovible 8.

La cartouche 8 comprend elle-même :
- un élément filtrant cylindrique 9,
- et deux rondelles 10 et 11 dans lesquelles sont enrobées les extrémités axiales de l'élément 9.

L'élément 9 est constitué en papier plissé chevronné, c'est-à-dire plié selon des lignes en zig-zag brisé aussi bien selon la direction circonférentielle de la cartouche que selon sa direction axiale.

Chacune des deux rondelles 10 et 11 est constituée en un matériau plastique souple et élastique, tel qu'une colle à prise rapide et elle est relativement épaisse, son épaisseur étant notamment de l'ordre de 5 mm et plus généralement comprise entre 3 et 8 mm.

L'une des rondelles 10 est prolongée radialement vers l'intérieur de l'élément 9 par un rebord annulaire 12.

Chacune des deux rondelles est en outre prolongée radialement vers l'extérieur par trois oreilles de centrage 13 propres à venir en contact avec la face intérieure du boîtier 1.

Le tube rigide 7, quant à lui, comprend :
- un tronçon tubulaire perforé 14 dont le diamètre extérieur est sensiblement égal au diamètre intérieur de l'élément filtrant 9 de façon à pouvoir longer la face intérieure dudit élément et ainsi empêcher ses déformations indésirables, notamment sous la pression du liquide à filtrer,
- une collerette 15 prolongeant radialement vers l'intérieur et vers l'extérieur une extrémité axiale du tronçon 14,
- et une bague cylindrique 16 prolongeant axialement ladite extrémité, bague elle-même terminée par un rebord radialement extérieur 17.

Ce rebord 17 est propre à coopérer aux fins d'accrochage avec trois crochets élastiques 18 compris par le couvercle 5 et la bague 16 sert alors de logement à un ressort hélicoïdal de compression 19 interposé entre la portion intérieure de la collerette 15 et le fond du couvercle.

La détente de ce ressort 19 sollicite constamment le tube 7 en direction d'un épaulement annulaire 20 faisant partie du fond du boîtier, épaulement avantageusement revêtu par la portion annulaire de plus petit diamètre d'une membrane annulaire 21 en caoutchouc faisant office de clapet anti-retour pour la circulation du liquide.

Dans le mode de réalisation perfectionné représenté à titre non limitatif, la portion interne de la collerette 15 supporte une cage 22, ici composée de trois barreaux longitudinaux, cage qui est disposée à l'intérieur du tronçon 14 et qui contient un clapet de décharge 23 à ressort 24.

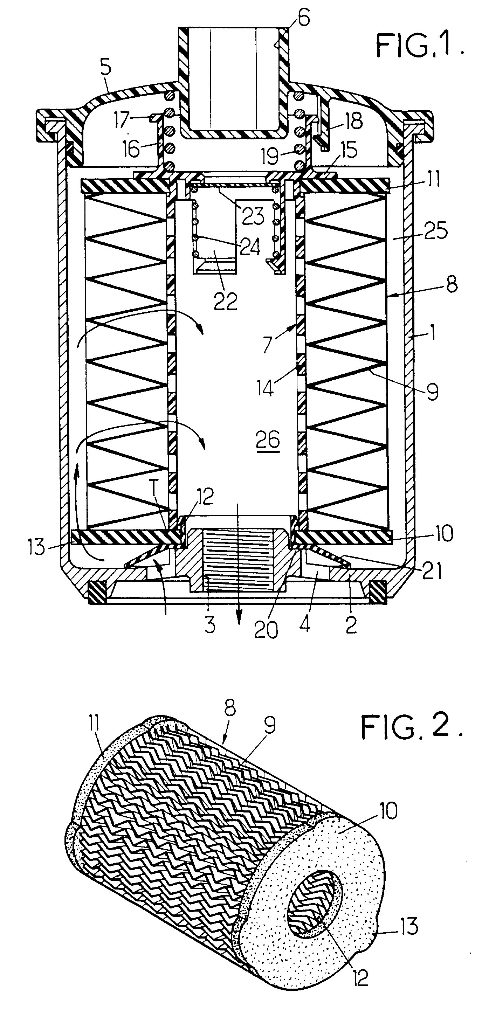

Comme bien visible sur la figure 1, la cartouche 8 est enfilée sur le tube 7 lui-même monté sur le couvercle 5 et elle peut être facilement séparée de ce tube par simple coulissement axial relatif lorsque le couvercle 5 est lui-même séparé du boîtier 1.

A la fin de son enfilage axial sur le tube 7, la portion annulaire de petit diamètre de la rondelle 11 vient buter contre la collerette 15 de ce tube et la tranche terminale T, dudit tube, la plus éloignée de la collerette 15 est disposée axialement en regard du rebord intérieur 12 de la rondelle 10.

Lors du montage subséquent de l'ensemble couvercle-tube-cartouche sur le boîtier 1, montage qui s'achève par la fermeture du couvercle 5, la résistance à la compression du ressort 19 a pour effet d'appliquer fermement en direction axiale la tranche T ci-dessus contre l'épaulement 20 du boîtier avec serrage entre eux du rebord 12.

Cette application est obtenue moyennant une légère déformation axiale de l'élément filtrant 9, déformation qui est facilitée par le type "chevronné" du plissage adopté.

L'étanchéité est ainsi automatiquement assurée vis-à-vis du liquide entre chacune des deux rondelles 10 et 11 et des portées en regard du boîtier 1 et/ou du tube 7.

Après fermeture du couvercle 5, le filtre est prêt à être revissé sur l'embout fileté correspondant (non représenté) du moteur.

Le circuit de l'huile ou autre liquide à filtrer est alors celui qui est représenté par les flèches.

Ce liquide est admis à travers les trous 4 et, après avoir soulevé légèrement la membrane anti-retour 21, il parvient dans la chambre 25 qui entoure l'élément filtrant 9.

Puis il traverse successivement, vers le centre du filtre, ledit élément 9, ce qui assure la filtration, puis le tronçon tubulaire perforé 14 pour parvenir dans la chambre centrale 26 d'où il est évacué axialement à travers l'alésage fileté 3.

Il est à noter que l'étanchéité ci-dessus décrite entre la cartouche filtrante et son support est renforcée par le fait que la pression du liquide sur la cartouche exerce sur celle-ci une pression centripète : cette pression a pour effet d'appliquer radialement vers le centre le bord cylindrique intérieur de la rondelle 11 contre une plage cylindrique en regard comprise par le tube 7.

Ici encore, une telle application radiale ferme est rendue possible par le fait que la cartouche se prête facilement à une légère déformation élastique selon les directions radiales.

En suite de quoi, et quel que soit le mode de réalisation adopté, on obtient un filtre pour liquide dont la constitution, les montages et démontages, et le fonctionnement résultent suffisamment de ce qui précède.

Ce filtre présente un certain nombre d'avantages par rapport à ceux antérieurement connus et en particulier les suivants :
- les cartouches filtrantes amovibles qui équipent ces filtres peuvent être facilement jetées, recyclées ou dégradées vu qu'elles ne comportent aucun composant métallique,
- elles sont particulièrement économiques du fait qu'elles ne comportent pas de tube intérieur rigide perforé associé en permanence, ce qui ne les empêche pas de jouer efficacement leur rôle de filtration sans déformation gênante, du fait que chacune d'elles est soutenue, lors de son travail, par un tube rigide perforé indépendant d'elle,
- leur montage étanche dans les boîtiers qui les reçoivent n'exige le recours à aucun joint d'étanchéité indépendant desdites cartouches.

## Revendications

1. Filtre pour liquide comprenant, d'une part, une cartouche filtrante comportant elle-même un élément filtrant tubulaire (9) en papier plissé dépourvu de tube rigide perforé central et dont les deux extrémités sont adhérées respectivement sur deux rondelles souples (10, 11) et, d'autre part, un boîtier de réception de la cartouche filtrante comprenant une cuve cylindrique (1) et un couvercle (5), caractérisé en ce qu'il contient, monté axialement sur l'intérieur du couvercle (5), du boitier de réception, un tube rigide (7) perforé dont le diamètre extérieur est sensiblement égal au diamètre intérieur de la cartouche (8) et qui présente à ses deux extrémités des portées annulaires (T, 15) contre lesquelles viennent s'appliquer automatiquement les deux rondelles (10, 11) de la cartouche, au moins lors de la mise en place du couvercle équipé de la cartouche sur la cuve.

2. Cartouche filtrante comportant un élément filtrant tubulaire (9) en papier plissé dépourvu de tube rigide perforé central et dont les deux extrémités sont adhérées respectivement sur deux rondelles souples (10, 11) conformées de façon à pouvoir coopérer à des fins d'étanchéité avec des portées annulaires en regard d'un tube rigide perforé (7) logé de façon amovible dans son volume cylindrique intérieur, caractérisé en ce que le diamètre intérieur de l'une de ses rondelles (10) est inférieur au diamètre intérieur de l'élément filtrant (9).

3. Cartouche filtrante selon la revendication 2, caractérisée en ce que le plissage du papier est du type "plissé-chevronné".

## Claims

1. A filter for liquid comprising firstly a filter cartridge itself including a tubular filter element (9) of folded paper having no central perforated rigid tube and having its two ends firmly secured to two flexible washers (10, 11) and secondly a housing for receiving the filter cartridge and comprising a cylindrical tank (1) and a cover (5), characterized in that the filter contains a perforated rigid tube (7) mounted axially on the inside of the cover (5) of the housing, the outside diameter of the tube being substantially equal to the inside diameter of the cartridge (8), and the tube presenting annular bearing surfaces (T, 15) at its two ends against which the two washers (10, 11) of the cartridge come to bear automatically, at least when the cover fitted with the cartridge is installed on the tank.

2. A filter cartridge including a tubular filter element (9) of a folded paper having no central perforated rigid tube and having its two ends firmly secured to two flexible washers (10, 11) which are shaped so as to be able to cooperate for sealing purposes with corresponding annular bearing surfaces which belong to a perforated rigid tube (7) removably received in its inside cylindrical volume, characterized in that the inside diameter of one of the washers (10) of the cartridge is smaller than the inside diameter of the filter element (9).

3. A filter cartridge according to claim 2, characterized in that the paper is folded with a "zig-zag accordion" type of folding.

## Patentansprüche

1. Flüssigkeitsfilter, umfassend zum einen eine Filterkartusche, welche ihrerseits aus einem röhrenförmigen Filterelement (9) aus plisseeartig gefaltetem Papier ohne steifes, gelochtes Mittelrohr besteht, dessen Enden mit jeweils einer von zwei flexiblen Ringscheiben (10, 11) verbunden sind, und zum anderen ein Filtergehäuse zur Aufnahme der Filterkartusche, welches einen zylindrischen Behälter (1) und einen Deckel (5) umfaßt, **dadurch gekennzeichnet**, daß es ein auf der Innenseite des Gehäusedeckels (5) axial montiertes steifes, gelochtes Rohr (7) enthält, dessen Außendurchmesser im wesentlichen gleich dem Innendurchmesser der Kartusche (8) ist und welches an seinen beiden Enden Stützringe (T, 15) aufweist, gegen die die beiden Ringscheiben (10, 11) der Kartusche spätestens nach dem Aufsetzen des mit der Kartusche bestückten Deckels auf den Behälter automatisch angedrückt werden.

2. Filterkartusche, bestehend aus einem röhrenförmigen Filterelement (9) aus plisseeartig gefaltetem Papier ohne steifes, gelochtes Mittelrohr, dessen Enden mit jeweils einer von zwei flexiblen Ringscheiben (10, 11) verbunden sind, die so ausgebildet sind, daß sie zwecks Abdichtung mit den Stützringen für ein steifes, gelochtes Rohr (7) zusammenwirken, welches in dem zylindrischen Innenraum des Behälters herausnehmbar untergebracht ist, dadurch gekennzeichnet, daß der Innendurchmesser einer der Ringscheiben (10) kleiner als der Innendurchmesser des Filterelements (9) ist.

3. Filterkartusche gemäß Anspruch 2, dadurch gekennzeichnet, daß das Papiers nach der Art eines Fischgrätmusters ("plissé-chevronné") gefaltet ist.
